# EUROPEAN PATENT APPLICATION

(11) **EP 4 550 011 A1**
(43) Date of publication of application: **07.05.2025**
(21) Application number: 23831435.5
(22) Date of filing: 27.06.2023
(51) Int. Cl.: G02B 1/04, C08J 7/046, C09D 1/00, C09D 7/61, G02B 1/14, G02C 7/00

(54) **COMPOSITION PRODUCTION METHOD AND EYEWEAR LENS PRODUCTION METHOD**

(30) Priority: 29.06.2022 JP 2022104878
(71) Applicant: Nikon-Essilor Co., Ltd., Tokyo 130-0026 (JP)
(72) Inventor: SHIODA Goro, Tokyo 130-0026 (JP)
(74) Representative: Hoffmann Eitle
(86) International application number: PCT/JP2023/023747
(87) International publication number: WO 2024/004995

(57) **Abstract**

The present invention provides a method for producing a composition capable of producing a composition having a small temporal change in viscosity and excellent in hardness (in particular, scratch hardness) of a cured film. The method for producing a composition of the present invention includes step 1 of heating a mixture containing a silsesquioxane having a cationically polymerizable group and metal oxide particles at a temperature higher than 60°C; and step 2 of mixing the mixture obtained in the step 1 with a cationic polymerization initiator to produce the composition.

## Description

### TECHNICAL FIELD

The present disclosure relates to a method for producing a composition and a method for producing a spectacle lens.

### BACKGROUND ART

In order to impart scratch resistance to a plastic spectacle lens base, a hard coat layer may be disposed on the plastic spectacle lens base (for example, Patent Literature 1).

### CITATION LIST

### PATENT LITERATURE

Patent Literature 1: JP 2010-515778 A

### SUMMARY OF INVENTION

The present disclosure relates to a method for producing a composition, the method including step 1 of heating a mixture containing a silsesquioxane having a cationically polymerizable group and metal oxide particles at a temperature higher than 60°C; and step 2 of mixing the mixture obtained in the step 1 with a cationic polymerization initiator to produce the composition.

### DESCRIPTION OF EMBODIMENTS

Hereinafter, a method for producing a composition of the present disclosure will be described in detail.

From the viewpoint of handleability, the composition is desired to have a small temporal change in viscosity. From the viewpoint of application as a hard coat layer and the like, it is also desired that a cured film formed using the composition has excellent hardness.

The composition produced by the method for producing a composition of the present disclosure has a small temporal change in viscosity, and a cured film obtained by using this composition is excellent in hardness (in particular, scratch hardness).

Hereinafter, a method for producing a composition of the present embodiment will be described in detail.

In the present specification, the term "to" is used as the meaning including numerical values described before and after the term as the lower and upper limits.

### [Method for Producing Composition]

The method for producing a composition of the present embodiment is a producing method including step 1 and step 2.

The step 1 is a step of heat-treating a mixture containing a silsesquioxane having a cationically polymerizable group and metal oxide particles at a temperature higher than 60°C. The step 2 is a step of mixing the mixture obtained in the step 1 with a cationic polymerization initiator to produce the composition.

As described later, as a result of heat-treating in the step 1 prior to the step 2, a change in viscosity during the storage of the composition is suppressed.

The composition produced by the method for producing a composition of the present disclosure is also excellent in scratch hardness because the composition contains the silsesquioxane having a cationically polymerizable group and the metal oxide particles.

Hereinafter, each step in the method for producing a composition of the present embodiment will be described in detail.

### <Step 1>

Step 1 is a step of heating a mixture containing a silsesquioxane having a cationically polymerizable group and metal oxide particles at a temperature higher than 60°C. When the present step 1 is carried out, it is presumed that the polymerization of the cationically polymerizable group of the silsesquioxane proceeds due to a trace amount of acid derived from the metal oxide particles, and a part of the silsesquioxane is prepolymerized.

Hereinafter, first, materials used in the step 1 will be described in detail, and then the procedure of the step will be described in detail.

### (Silsesquioxane Having Cationically Polymerizable Group)

In the step 1, a silsesquioxane having a cationically polymerizable group (hereinafter, also simply referred to as "specific silsesquioxane") is used.

Typically, a silsesquioxane is a silane compound which has a basic skeleton represented by the formula (1) and which is obtained by hydrolyzing a trifunctional silane compound such as alkoxysilane, chlorosilane, or silanol. Known examples of the structure of the silsesquioxane compound include, in addition to an irregular form called a random structure, a ladder structure, a cage type (completely condensed cage type) structure, and an incomplete cage type structure (which is a partially cleaved structure of a cage type structure; e.g., a structure lacking a part of silicon atoms in the cage type structure, a structure in which a silicon-oxygen bond is cleaved in a part of the cage type structure).

In the following formula (1), R³ represents an organic group.

Formula (1): R³-SiO_{3/2}

The specific silsesquioxane preferably has a basic skeleton in which R³ in the formula (1) is an organic group having a cationically polymerizable group.

The structure of the specific silsesquioxane is not particularly limited, and may be any of the random structure, the ladder structure, the cage type structure, and the incomplete cage type structure, or may be a mixture of plural types of structures.

A cationically polymerizable group equivalent in the specific silsesquioxane is not particularly limited, and is preferably 50 to 500 g/eq., and more preferably 150 to 300 g/eq. because the hardness of a cured film that can be formed using the composition is more excellent.

The cationically polymerizable group in the specific silsesquioxane is not particularly limited, and examples thereof include an oxetanyl group and an epoxy group.

The oxetanyl group is a group represented by the following formula (2). R² represents a hydrogen atom or an alkyl group (for example, a methyl group, an ethyl group, a propyl group, or the like). * represents a binding position.

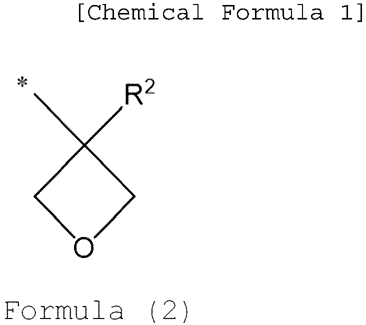

The epoxy group is a group represented by the following formula (3). R¹ represents a hydrogen atom or an alkyl group (for example, a methyl group, an ethyl group, a propyl group, or the like). * represents a binding position.

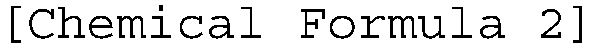

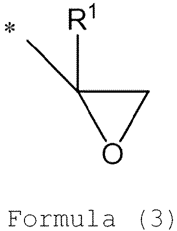

The specific silsesquioxane may be synthesized by a known method, or a commercially available product may be used. Examples of the commercially available product include OX-SQ TX-100, OX-SQ SI-20, OX-SQ HDX, and OX-SQ ME-20, manufactured by Toagosei Co., Ltd.

### (Metal Oxide Particles)

In the step 1, metal oxide particles are used.

The type of the metal oxide particles is not particularly limited, and examples thereof include known metal oxide particles. Examples of the metal oxide particles include particles of an oxide of at least one metal selected from Si, Al, Sn, Sb, Ta, Ce, La, Fe, Zn, W, Zr, In, and Ti. Among them, preferred are particles of a Si-containing oxide (silicon oxide particles), particles of a Sn-containing oxide (tin oxide particles), particles of a Zr-containing oxide (zirconium oxide particles), or particles of a Ti-containing oxide (titanium oxide particles) from the viewpoint of handleability. That is, the metal oxide particles preferably contain at least one type of atom selected from the group consisting of Si, Sn, Zr, and Ti.

The metal oxide particles may contain, among the metals exemplified above, only one metal (metal atom type), or two or more metals (metal atom types).

The average particle size of the metal oxide particles is not particularly limited and is, for example, preferably 1 to 200 nm, and more preferably 5 to 30 nm. When the average particle size is within the above range, the dispersion stability of the metal oxide particles in the composition is more excellent, and the whitening of the cured product can be further suppressed.

The average particle size is determined by measuring the diameters of 100 or more metal oxide particles with a transmission electron microscope and arithmetically averaging the diameters. When the metal oxide particles do not have a perfect circular shape, the major axis length is taken as the diameter.

The metal oxide particles may be used in a colloidal state where the particles are dispersed in a solvent. For example, when the metal oxide particles contain Si as a metal, colloidal silica can be used.

When the colloidal silica is used as the metal oxide particles, examples of commercially available products thereof include "OSCAL" series, manufactured by JGC Catalysts and Chemicals Ltd., "SNOWTEX" series, manufactured by Nissan Chemical Industries, Ltd., and "QUARTRON" series, manufactured by FUSO CHEMICAL CO., LTD.

In the step 1, components other than the specific silsesquioxane and the metal oxide particles described above may be used.

### (Solvent)

In the step 1, a solvent may be used. The solvent referred to herein may be a solvent to be added in the step 1, or may be a dispersion medium when metal oxide particles commercially available as a colloidal solution are used.

The solvent is not particularly limited, and may be water or an organic solvent.

Examples of the organic solvent include an alcohol-based solvent, a ketone-based solvent, an ether-based solvent, an ester-based solvent, a hydrocarbon-based solvent, a halogenated hydrocarbon-based solvent, an amide-based solvent, a sulfone-based solvent, and a sulfoxide-based solvent.

The alcohol-based solvent is preferably an alcohol-based solvent having 10 or less carbon atoms, and more preferably an alcohol-based solvent having 5 or less carbon atoms (for example, isopropanol). The alcohol-based solvent may be a polyhydric alcohol having two or more hydroxy groups in one molecule.

In addition to the solvent, examples of the other components include an ultraviolet absorber, a surfactant, a polymerization inhibitor, an anti-aging agent, a coating film modifier, a light stabilizer, an antioxidant, a coloring inhibitor, a dye, a filler, and an internal mold release agent.

### (Procedure of Step 1)

In the step 1, a mixture containing a specific silsesquioxane and metal oxide particles is heated at a temperature higher than 60°C.

A method in which the mixture containing a specific silsesquioxane and metal oxide particles is obtained is not particularly limited, and the respective components may be mixed at once, or may be added and mixed in a divided manner.

When the mixture is obtained, a stirring treatment may be performed as necessary.

The mixing ratio of the specific silsesquioxane and the metal oxide particles in the mixture is not particularly limited, and the mass ratio of the content of the metal oxide particles to the content of the specific silsesquioxane in the mixture is preferably 0.2 to 10.0, and more preferably 0.5 to 2.0.

The total content of the specific silsesquioxane and the metal oxide particles in the mixture is not particularly limited, and the total content of the specific silsesquioxane and the metal oxide particles is preferably 80 to 100% by mass, and more preferably 90 to 100% by mass, with respect to the total solid content in the mixture.

A solid content in the mixture means a component excluding the solvent in the mixture. Even when the component is liquid, the component is calculated as the solid content.

The mixture may contain components other than the specific silsesquioxane and the metal oxide particles as described above.

Examples of the other components include the solvents described above.

The content of the solvent in the mixture is not particularly limited and is preferably 30 to 60% by mass, and more preferably 40 to 60% by mass, with respect to the total mass of the mixture.

A method in which the mixture is heated in the step 1 is not particularly limited, and examples thereof include a known method and a method using a known heating device.

Examples of the heating device include an electric heater such as a hot plate or a mantle heater, an infrared heater, an oil bath or other oil bath devices, and a hot water bath device such as a water bath.

While the heating may be performed in an open system or in a sealed system, it is preferable to perform the heating in a sealed system because the temperature of the mixture can be raised to a temperature higher than the boiling point of the solvent in the mixture, and even if there is a volatile component contained in the mixture, heating can be performed at a high temperature.

During heating, a stirring treatment may be performed as necessary.

The heating temperature of the mixture is higher than 60°C, preferably 80°C or higher, more preferably 100°C or higher, still more preferably 120°C or higher, and particularly preferably 140°C or higher.

The upper limit of the heating temperature is not particularly limited and is preferably 200°C or lower.

The heating temperature refers to a set temperature in a heating device (such as a hot plate) used for heating the mixture.

The heating time of the mixture is not particularly limited as long as the heating time is appropriately selected according to the heating temperature, and for example, the heating time is preferably 1 hour or more, more preferably 3 hours or more, still more preferably 4 hours or more, and particularly preferably more than 4 hours.

The upper limit of the heating time is, for example, preferably 12 hours or less, more preferably 10 hours or less, still more preferably 8 hours or less, particularly preferably less than 8 hours, and most preferably 7 hours or less.

<Step 2>

Step 2 is a step of mixing the mixture obtained in the step 1 with a cationic polymerization initiator to produce the composition.

Hereinafter, first, materials used in the step 2 will be described in detail, and then the procedure of the step will be described in detail.

### (Cationic Polymerization Initiator)

In the step 2, the cationic polymerization initiator is used.

The cationic polymerization initiator is not particularly limited, and examples thereof include a thermal cationic polymerization initiator and a photocationic polymerization initiator.

The type of the thermal cationic polymerization initiator is not particularly limited, and examples thereof include known thermal cationic polymerization initiators. Examples of the thermal cationic polymerization initiator include onium salts such as a sulfonium salt, an anilinium salt, a pyridinium salt, a toluidinium salt, a phosphonium salt, and an iodonium salt. These onium salts include anions such as a hexafluorophosphate anion (PF₆⁻), a tetrafluoroborate anion (BF₄⁻), a hexafluoroantimonate anion (SbF₆⁻), and a hexafluoroarsenate anion (AsF₆⁻).

The sulfonium cation may be a triarylsulfonium cation, and examples of the triarylsulfonium cation include a triphenylsulfonium cation in which the aryl group is a substituted phenyl group having an alkyl group, a thioether group, an alkoxy group, or the like as a substituent.

Specific examples of the triarylsulfonium cation include a diphenyl\[4-(phenylthio)phenyl]sulfonium cation, a triphenylsulfonium cation, and an alkyltriphenylsulfonium cation.

Examples of commercially available products of the thermal cationic polymerization initiator include ADEKA OPTRON CP-66, manufactured by ADEKA CORPORATION, and SAN-AID SI-150L, manufactured by Sanshin Chemical Industry Co., Ltd.

The type of the photocationic polymerization initiator is not particularly limited, and examples thereof include known photocationic polymerization initiators. Examples of the photocationic polymerization initiator include onium salts such as an iodonium salt (for example, an aromatic iodonium salt) and a sulfonium salt (for example, an aromatic sulfonium salt), halogen-containing compounds such as an s-triazine derivative, sulfone compounds, sulfonic acid compounds, sulfonimide compounds, and diazomethane compounds. Among them, an aromatic sulfonium salt is preferred from the viewpoint of curability.

### (Other Components)

In the step 2, other components other than the cationic polymerization initiator may be used.

Examples of the other components include a solvent, an ultraviolet absorber, a surfactant, a polymerization inhibitor, an anti-aging agent, a coating film modifier, a light stabilizer, an antioxidant, a coloring inhibitor, a dye, a filler, and an internal mold release agent.

Examples of the solvent include the solvent described in the step 1 described above.

Examples of the ultraviolet absorber include a hydroxyphenyltriazine-based ultraviolet absorber having a structure in which three hydrogen atoms on a triazine ring are substituted with phenyl groups, and a benzotriazole-based ultraviolet absorber having a benzotriazole structure.

Examples of the surfactant include a polyether-modified silicone surfactant having a polyether structure.

### (Procedure of Step 2)

In the step 2, the mixture obtained in the step 1 is mixed with the cationic polymerization initiator to produce the composition.

A method in which the mixture is mixed with the cationic polymerization initiator is not particularly limited, and the cationic polymerization initiator may be added to the mixture in a divided manner or may be added at a time.

During mixing, a stirring treatment may be performed as necessary.

The amount of the cationic polymerization initiator used is not particularly limited and is preferably 0.1 to 2.0% by mass, and more preferably 0.5 to 1.0% by mass, with respect to the total amount of the amount of the specific silsesquioxane used in the step 1 and the amount of the metal oxide particles used in the step 1 as described later.

The amount of the metal oxide particles used in the step 1 with respect to the total amount of the amount of the specific silsesquioxane used in the step 1, the amount of the metal oxide particles used in the step 1, and the amount of the cationic polymerization initiator used in the step 2 in the method for producing the composition of the present embodiment is not particularly limited and is preferably 40 to 60% by mass, and more preferably more than 40% by mass and less than 60% by mass.

### <Other Steps>

The method for producing a composition of the present embodiment may have other steps in addition to the step 1 and the step 2.

When the mixture obtained in the step 1 contains a solvent, step 3 of substituting the solvent in the mixture with another solvent may be performed as the other step between the step 1 and the step 2.

The procedure of step 3 is not particularly limited, and examples thereof include a method in which a first solvent contained in the mixture obtained in the step 1 is volatilized and removed, and a second solvent of a type different from the volatilized first solvent is added to the obtained mixture. Another example is a method in which the second solvent of a type different from the first solvent contained in the mixture obtained in the step 1 is added to the mixture, and then the first solvent is volatilized and removed from the obtained mixture.

A method for volatilizing the solvent is not particularly limited, and examples thereof include a method in which the solvent is volatilized under reduced pressure conditions.

The solvent (the other solvent) used in the step 3 is not particularly limited, and examples thereof include the solvents described in the step 1 described above. Among them, methanol, butyl cellosolve, or methyl ethyl ketone is preferred.

### [Composition]

Since the composition produced by the method for producing a composition of the present embodiment contains the cationic polymerization initiator, the composition can be used as a curable composition.

The composition includes the foregoing specific silsesquioxane and metal oxide particles. As described above, it is presumed that the composition contains the prepolymerized specific silsesquioxane.

The content of the specific silsesquioxane in the composition of the present embodiment is not particularly limited and is preferably 35 to 70% by mass, and more preferably 35 to 60% by mass, with respect to the total solid content in the composition of the present embodiment from the viewpoint that the scratch hardness of the cured film formed using the composition is more excellent and the temporal change in viscosity of the composition is smaller.

The solid content in the composition is components constituting the cured film formed using the composition, and corresponds to the specific silsesquioxane, metal oxide particles, and thermal cationic polymerization initiator and the like described above. The solvents are not contained in the solid content. Even if the component is liquid, the component is calculated as the solid content as long as the component constitutes the cured film.

The content of the metal oxide particles in the composition of the present embodiment is not particularly limited and is preferably 35 to 70% by mass, and more preferably 35 to 60% by mass, with respect to the total solid content in the composition of the present embodiment from the viewpoint that the scratch hardness of the cured film formed using the composition is more excellent and the temporal change in viscosity of the composition is smaller.

The content of the cationic polymerization initiator in the composition of the present embodiment is not particularly limited and is preferably 0.1 to 3.0% by mass, and more preferably 0.2 to 1.5% by mass, with respect to the total solid content in the composition of the present embodiment from the viewpoint that the scratch hardness of the cured film formed using the composition is more excellent and the temporal change in viscosity of the composition is smaller.

When the ultraviolet absorber is contained in the composition of the present embodiment, the content of the ultraviolet absorber is not particularly limited and is preferably 0.1 to 10% by mass, and more preferably 0.5 to 2.0% by mass, with respect to the total solid content in the composition of the present embodiment.

When the surfactant is contained in the composition of the present embodiment, the content of the surfactant is not particularly limited and is preferably 0.1 to 10% by mass, and more preferably 0.5 to 2.0% by mass, with respect to the total solid content in the composition of the present embodiment.

The viscosity (20°C) of the composition is not particularly limited and is preferably 60.0 cP or less, more preferably 30.0 cP or less, and still more preferably 20.0 cP or less, from the viewpoint that the scratch hardness of the cured film formed using the composition is more excellent or workability in forming the hard coat layer is excellent. The lower limit thereof is not particularly limited and is often 5.0 cP or more, and more often 10.0 cP or more.

The viscosity can be measured using a known measuring apparatus (for example, a cone-plate type viscometer or the like).

The solid content concentration of the composition is not particularly limited and is preferably 40 to 70% by mass, and more preferably 50 to 60% by mass, with respect to the total mass of the composition.

The composition can be used, for example, as a composition for forming a cured film on a spectacle lens base.

### [Method for Producing Spectacle Lens]

The present disclosure includes also a method for producing a spectacle lens, the method including a step of forming a cured film on a spectacle lens base using the composition produced by the method for producing a composition of the present disclosure.

Hereinafter, first, materials and members used in the present step will be described in detail, and then the procedure of the step will be described in detail.

The composition used in the present step is as described above.

Examples of the type of the spectacle lens base used in the present step include a spectacle lens base composed of an organic material or an inorganic material.

Examples of the spectacle lens base include a finished lens obtained by optically finishing both convex and concave surfaces and forming it according to a desired diopter, a semi-finished lens obtained by finishing only a convex surface as an optical surface (for example, a spherical surface, a rotation target aspheric surface, and a progressive-addition surface and the like), and a lens obtained by polishing a concave surface of the semi-finished lens according to a wearer's prescription.

Examples of the organic material (so-called resin) include a (meth)acrylic resin, a thiourethane-based resin, an allyl-based resin, an episulfide-based resin, a polycarbonate-based resin, a polyurethane-based resin, a polyester-based resin, a polystyrene-based resin, a polyethersulfone-based resin, a poly-4-methylpentene-1 based resin, and a diethylene glycol bisallyl carbonate-based resin (CR-39).

Examples of the inorganic material include glass.

A primer layer may be disposed on the spectacle lens base.

The thickness of the spectacle lens base may be 1 to 30 mm from the view point of handleability.

The thickness (average thickness) is determined, for example, by measuring thicknesses at five arbitrary points and arithmetically averaging the measured thicknesses.

The spectacle lens base preferably has translucency, and may be either transparent or opaque. The spectacle lens base may be colored.

### (Procedure of Step)

A method for forming the cured film on the spectacle lens base using the composition is not particularly limited, and examples thereof include a method in which the spectacle lens base and the composition are brought into contact with each other to form a coating film on the spectacle lens base, and the coating film is subjected to a curing treatment to form the cured film.

Hereinafter, the procedure of the method will be described in detail.

The method for bringing the spectacle lens base and the composition into contact with each other is not particularly limited, and the composition may be applied onto the spectacle lens base, or the spectacle lens base may be dipped in the composition.

The procedure of the curing treatment is not particularly limited, and a heating treatment is preferred.

The conditions for the heating treatment are not particularly limited, and suitable conditions are selected depending on the type of the thermal cationic polymerization initiator to be used. In particular, a heating temperature is preferably 30 to 120°C, more preferably 50 to 100°C, and a heating time is preferably 5 to 360 minutes, more preferably 10 to 60 minutes.

The film thickness of the cured film is not particularly limited, but may be, for example, 1.0 µm or more, and is preferably 5.0 µm or more. The upper limit of the film thickness may be, for example, 30.0 µm or less, and is preferably 20.0 µm or less.

The film thickness is an average film thickness, and determined by measuring the film thicknesses of the cured film at five arbitrary points and arithmetically averaging the film thicknesses, in the measuring method of the film thickness. An optical film thickness meter can also be used.

### EXAMPLES

Hereinafter, the composition of the present disclosure will be described in more detail with reference to Examples and Comparative Examples, but is not limited by these Examples at all.

### <Example 1>

### (Preparation of Composition (Step 1))

A composition of Example 1 was prepared by the following procedure.

To a glass container equipped with a stirring bar were added a cationically curable silsesquioxane (OX-SQ TX-100, manufactured by Toagosei Co., Ltd.) (27.13 g) as silsesquioxane (A) and colloidal silica (OSCAL-1432E, manufactured by JGC Catalysts and Chemicals Ltd., isopropanol dispersion, solid content: 30% by mass) (90.45 g) as metal oxide particles (B) to prepare a mixture.

The obtained mixture was stirred for 6 hours while being heated on a hot plate set at 160°C. At this time, the glass container was in a sealed state with a lid, and a solvent in the mixture was in a refluxed state.

### (Preparation of Composition (Step 3))

After the completion of heating, the obtained reaction solution was cooled overnight to room temperature, and then butyl cellosolve (10.85 g) was added as a solvent for film formation to the cooled reaction solution. Next, isopropanol was distilled off from the reaction solution under reduced pressure at 40°C over 2 hours.

Methanol (33.40 g) was added to the obtained crude product to obtain a liquid composition X1.

### (Preparation of Composition (Step 2))

To a glass container equipped with a stirring bar, the liquid composition X1 (98.52 g) obtained in the above step 1, an SbF₆⁻ based sulfonium salt (SAN-AID SI-150L, manufactured by Sanshin Chemical Industry Co., Ltd.) (0.52 g) as cationic polymerization initiator (D), a hydroxyphenyltriazine-based ultraviolet absorber (Tinuvin 477, manufactured by BASF Japan Ltd.) (0.62 g) as ultraviolet absorber (F), and a polyether-modified silicone (DOWSIL L-7001, manufactured by Dow Corning Toray Co., Ltd.) (0.33 g) as surfactant (G) were added and mixed to obtain a composition 1.

### <Examples 2 and 5 to 9, Comparative Examples 2 to 3>

Compositions 2 and 5 to 9 and compositions C2 to C3 were obtained according to the same procedure as in Example 1 except that the set temperature of a hot plate and a heating time were changed to numerical values shown in Table 1 when a mixture was heated.

Comparative Example 2 corresponds to an example in which a heat treatment in the step 1 is not performed.

### <Example 3>

A composition 3 was obtained according to the same procedure as in Example 1 except that the amount of a cationically curable silsesquioxane (OX-SQ TX-100, manufactured by Toagosei Co., Ltd.) used was changed from 27.13 g to 32.56 g and the amount of colloidal silica (OSCAL-1432E, manufactured by JGC Catalysts and Chemicals Ltd., isopropanol dispersion, solid content: 30% by mass) used was changed from 90.45 g to 72.36 g.

### <Example 4>

A composition 4 was obtained according to the same procedure as in Example 1 except that the amount of a cationically curable silsesquioxane (OX-SQ TX-100, manufactured by Toagosei Co., Ltd.) used was changed from 27.13 g to 21.71 g and the amount of colloidal silica (OSCAL-1432E, manufactured by JGC Catalysts and Chemicals Ltd., isopropanol dispersion, solid content: 30% by mass) used was changed from 90.45 g to 108.7 g.

### <Comparative Example 1>

To a glass container equipped with a stirring bar was added 3-Glycidoxypropyltrimethoxysilane (KBM403, manufactured by Shin-Etsu Chemical Co., Ltd.) (19.70 g) as hydrolyzable silicon compound (C), and 0.1 N hydrochloric acid (4.50 g) was gradually added dropwise thereto while the mixture was stirred.

After the completion of the dropwise addition, the mixture was stirred at room temperature for 24 hours.

Subsequently, titanium oxide colloid (NE58, manufactured by JGC Catalysts and Chemicals Ltd., solid content: 30% by mass) (35.60 g) as metal oxide particles (B), acetylacetone aluminum (manufactured by Kishida Chemical Co., Ltd.) (1.60 g) as catalyst (E), methanol (38.50 g), and a polyether-modified silicone (DOWSIL L-7001, manufactured by Dow Corning Toray Co., Ltd.) (0.10 g) as surfactant (G) were added to and mixed with the obtained mixture to obtain a composition C1 of Comparative Example 1.

### <Evaluation>

The compositions obtained in the above Examples and Comparative Examples were evaluated as below. The results are summarized in Table 1 described later.

### (Temporal Viscosity Stability)

The temporal viscosity stability of the composition of each of Examples or Comparative Examples was measured by the following method.

Before a leaving treatment described later, the temperature of the composition was prepared to 20°C, and the initial viscosity of the composition was measured using a vibration viscometer (VM-100, manufactured by Yamaichi Electronics Co., Ltd.).

After the measurement of the initial viscosity, the composition was allowed to stand at 5°C under light-shielding conditions for 24 hours, and then the viscosity of the composition after being allowed to stand was measured as a temporal viscosity in the same manner as in the measurement of the initial viscosity.

From the values of the initial viscosity and temporal viscosity, a temporal viscosity change rate was determined as follows, and the temporal viscosity stability was evaluated based on the following evaluation criteria. Temporal viscosity change rate (%) = 100×(|(temporal viscosity)-(initial viscosity)|/(initial viscosity))

### (Evaluation Criteria of Temporal Viscosity Stability)

A: Temporal viscosity change rate is 10% or less
B: Temporal viscosity change rate is more than 10% and 50% or less
C: Temporal viscosity change rate is more than 50% and 200% or less
D: Temporal viscosity change rate is more than 200%

### (Evaluation of Pencil Hardness)

Using the composition of each of Examples or Comparative Examples, a plastic spectacle lens base with a cured film was prepared by the following method.

First, as the plastic spectacle lens base, a lens having a refractive index of 1.60 (Nikon Lite AS material S-3.00D, manufactured by Nikon-Essilor Co., Ltd.) was used.

The composition of each of Examples or Comparative Examples was applied to one surface of the plastic spectacle lens base by a spin coating method. Specifically, the plastic spectacle lens base was rotated at 300 rpm for 1 second, and 4 ml of the composition was dropped from the central part to the outer peripheral part of the plastic spectacle lens base during the rotation. Then, the plastic spectacle lens base to which the composition was applied was further rotated at 300 rpm for 15 seconds, further rotated to reach 400 rpm over 5 seconds and rotated for 1 second, further rotated to reach 700 rpm over 5 seconds and rotated for 1 second, and further rotated to reach 2000 rpm over 9.9 seconds and rotated for 1 second, to thereby obtain a plastic spectacle lens base with a coating film.

Next, the obtained plastic spectacle lens base with a coating film was heated at 100°C for 20 minutes, and then further heated at 100°C for 1 hour to form a cured film, thereby obtaining a plastic spectacle lens base with a cured film. The film thickness of the obtained cured film was 15 µm.

Using the plastic spectacle lens base with a cured film produced using the composition of each of Examples or Comparative Examples, the scratch hardness (pencil hardness) was evaluated by the following procedure.

Specifically, the pencil hardness of the cured film was measured in accordance with the method specified in JIS K5600-5-4 (1999), and evaluated based on the following evaluation criteria.
A: Pencil hardness is 4H or more
B: Pencil hardness is 3H or more and less than 4H
C: Pencil hardness is 2H or more and less than 3H

### (Evaluation of Scratch Hardness)

The plastic spectacle lens base with a cured film was produced using the composition of each of Examples or Comparative Examples by the method described in (Evaluation of Pencil Hardness).

Using the obtained plastic spectacle lens base with a cured film, the scratch hardness of the cured film was evaluated by the following procedure.

Using a friction wear tester (TriboGear TYPE40, manufactured by Shinto Scientific Co., Ltd.), a sapphire scratch needle (BH0001-02, manufactured by Shinto Scientific Co., Ltd.) having a tip radius of 0.01 mm and an apex angle of 60° was brought into vertical contact with a convex surface (surface with the cured film) of the plastic spectacle lens base with a cured film prepared by the above procedure, and was moved once for a length of 10 mm at a rate of 60 mm/minute while being applied with a vertical load of 10 g.

Using a scanning white interference microscope (VS1000, manufactured by Hitachi, Ltd.), the depth of a scratch mark in the convex surface of the plastic spectacle lens base with a cured film was measured, and the scratch hardness was evaluated based on the following evaluation criteria.
A: The depth of the scratch mark is 50 nm or less
B: The depth of the scratch mark is more than 50 nm and 80 nm or less
C: The depth of the scratch mark is more than 80 nm

The evaluation results are shown in Table 1.

The description of each numerical value shown in Table 1 indicates the amount (parts by mass) of each component used in the composition.

In Table 1, the column of "B/A+B+D (% by mass)" shows the amount of the metal oxide particles (B) used with respect to the total amount of the silsesquioxane (A) used, the metal oxide particles (B) used, and the cationic polymerization initiator (D) used in the producing method of the present disclosure (unit:% by mass).

In Table 1, the column of "Heating temperature" shows the set temperature of the hot plate when the mixture is heated in the step 1.

In Table 1, the column of "Heating time" shows the heating time (stirring time) when the mixture is heated in the step 1.

In Table 1, the column of "Film thickness" shows the film thickness of the cured film. The film thickness is a value measured by an optical film thickness meter.

In Table 1, the column of "Hardness-1" shows the results of (Evaluation of Pencil Hardness) above, the column of "hardness-2" shows the results of (Evaluation of Scratch Hardness) above, and the column of "Viscosity" shows the results of (Temporal Viscosity Stability) above.

**[Table 1]**

| Table 1 | Preparing conditions of composition | | | | | | | | | | Film thickness | Evaluation | | | | | | |
|---|---|---|---|---|---|---|---|---|---|---|---|---|---|---|---|---|---|---|
| | Silsesquioxane compound (A) | Metal oxide particles (B) | Hydrolyzable silicon compound (C) | Cationic polymerization initiator (D) | Catalyst (E) | Ultraviolet absorber (F) | Surfactant (G) | B/A + B + D | Heating temperature | Heating time | | Hardness-1 | | Hardness-2 | | Viscosity | | |
| | | | | | | | | | | | | Hardness | Evaluation | Depth of scratch mark | Evaluation | Initial viscosity | Temporal viscosity | Evaluation |
| Example 1 | 27.1 | 27.1 | 0.0 | 0.5 | 0.0 | 0.6 | 0.3 | 50% | 160°C | 6 hr | 15 µm | 4 H | A | 34 nm | A | 168 cP | 168 cP | A |
| Example 2 | 27.1 | 27.1 | 0.0 | 0.5 | 0.0 | 0.6 | 0.3 | 50% | 100°C | 6 hr | 15 µm | 4 H | A | 24 nm | A | 15.8 cP | 16.7 cP | A |
| Example 3 | 32.6 | 21.7 | 0.0 | 0.5 | 0.0 | 0.6 | 0.3 | 40% | 160°C | 6 hr | 15 µm | 3 H | B | 68 nm | B | 29.8 cP | 29.2 cP | A |
| Example 4 | 21.7 | 32.6 | 0.0 | 0.5 | 0.0 | 0.6 | 0.3 | 60% | 160°C | 6 hr | 15 µm | 4 H | A | 36 nm | A | 49.3 cP | 50.5 cP | A |
| Example 5 | 27.1 | 27.1 | 0.0 | 0.5 | 0.0 | 0.6 | 0.3 | 50% | 160°C | 2 hr | 15 µm | 4 H | A | 27 nm | A | 15.7 cP | 33.5 cP | C |
| Example 6 | 27.1 | 27.1 | 0.0 | 0.5 | 0.0 | 0.6 | 0.3 | 50% | 160°C | 4 hr | 15 µm | 4 H | A | 29 nm | A | 16 cP | 20 cP | B |
| Example 7 | 27.1 | 27.1 | 0.0 | 0.5 | 0.0 | 0.6 | 0.3 | 50% | 160°C | 8 hr | 15 µm | 4 H | A | 30 nm | A | 21.5 cP | 22.5 cP | A |
| Example 8 | 27.1 | 27.1 | 0.0 | 0.5 | 0.0 | 0.6 | 0.3 | 50% | 140°C | 6 hr | 15 µm | 4 H | A | 28 nm | A | 19.1 cP | 19.5 cP | A |
| Example 9 | 27.1 | 27.1 | 0.0 | 0.5 | 0.0 | 0.6 | 0.3 | 50% | 180°C | 6 hr | 15 µm | 4 H | A | 31 nm | A | 20.3 cP | 21.3 cP | A |
| Comparative Example 1 | 0.0 | 41.4 | 56.5 | 0.0 | 1.7 | 0.0 | 0.4 | 42% | - | - | 2.5 µm | 2 H | C | 4263 nm | C | 2.1 cP | 2.1 cP | A |
| Comparative Example 2 | 27.1 | 27.1 | 0.0 | 0.5 | 0.0 | 0.6 | 0.3 | 50% | - | - | 15 µm | 4 H | A | 22 nm | A | 15.4 cP | 72.3 cP | D |
| Comparative Example 3 | 27.1 | 27.1 | 0.0 | 0.5 | 0.0 | 0.6 | 0.3 | 50% | 60°C | 6 hr | 15 µm | 4 H | A | 22 nm | A | 15.3 cP | 62.2 cP | D |

As shown in Table 1, the composition of the present disclosure was confirmed to exhibit the desired effect.

## Claims

1. A method for producing a composition, the method comprising:
step 1 of heating a mixture containing a silsesquioxane having a cationically polymerizable group and metal oxide particles at a temperature higher than 60°C; and
step 2 of mixing the mixture obtained in the step 1 with a cationic polymerization initiator to produce the composition.

2. The method for producing a composition according to claim 1, wherein a time for the heating is 1 hour or more.

3. The method for producing a composition according to claim 1 or 2, wherein a temperature for the heating is 100°C or higher.

4. The method for producing a composition according to any one of claims 1 to 3, wherein an amount of the metal oxide particles used is 40 to 60% by mass with respect to a total amount of the silsesquioxane having a cationically polymerizable group used, the metal oxide particles used, and the cationic polymerization initiator used.

5. The method for producing a composition according to any one of claims 1 to 4, wherein the metal oxide particles contain at least one type of atom selected from the group consisting of Si, Sn, Zr, and Ti.

6. The method for producing a composition according to any one of claims 1 to 5, wherein the cationically polymerizable group is an oxetanyl group.

7. A method for producing a spectacle lens, the method comprising a step of forming a cured film on a spectacle lens base using the composition produced by the method according to any one of claims 1 to 6.
